# EUROPEAN PATENT SPECIFICATION

(11) **EP 2 730 154 B1**
(45) Date of publication and mention of the grant of the patent: **28.06.2017**
(21) Application number: 13189661.5
(22) Date of filing: 22.10.2013
(51) Int. Cl.: A01B 1/06, A01D 34/82, A01B 33/02

(54) **A connecting joint between handlebars and a frame of an agricultural tool**
Verbindungsbeschlag zwischen Lenkstange und Rahmen eines landwirtschaftlichen Werkzeugs
Joint de liaison entre un guidon et un cadre d'un outil agricole

(30) Priority: 31.10.2012 IT RE20120077
(43) Date of publication of application: 14.05.2014
(73) Proprietor: Eurosystems S.p.A., 42045 Luzzara (Reggio Emilia) (IT)
(72) Inventor: Bovi, Fabio, 42045 Luzzara (Reggio Emilia) (IT)
(74) Representative: Corradini, Corrado

(56) References cited:
- CH-A- 533 411
- DE-A1- 2 648 349
- FR-A- 1 290 906

## Description

The present invention relates to a connecting joint between handlebars and a frame of an agricultural tool, for example the frame of a motor hoe or motor scythe.

As is known, agricultural tools like motor hoes and motor scythes generally comprise a support frame, on which work tools (hoes, blades, or other), and a motor driving the work tools are installed. The support frame may be further equipped with one or more support wheels, which may be located at the front and/or back relative to the work tools, and serve to facilitate movement of the agricultural tool over the ground.

Handlebars are generally also fixed to the frame to permit a user to steer and drive the agricultural tool over the ground. In some embodiments the position of the handlebars is adjustable both in height and possibly also laterally, so that users can hold the handlebars in an optimum manner in all conditions of work.

To permit lateral adjustment the handlebars are generally fixed to the frame of the agricultural tool using a connecting joint permitting rotation of the handlebars about a predefined axis of orientation, which is substantially vertical or slightly inclined.

In particular, the connecting joint generally comprises two frontally toothed crowns, coaxial to the axis of orientation and facing one another, one of which toothed crowns is fixed to the frame and one of which is fixed to the handlebars.

The joint further comprises suitable releasable fastening means, designed to selectively fasten the two toothed crowns in reciprocal engagement or to enable the toothed crowns to separate axially, releasing the engagement.

In this way, to laterally adjust the handlebars, users need only de-enmesh the fastening means, separate the toothed crowns such as to free the engagement, rotate the handlebars relative to the frame until the required orientation is attained, then re-enmesh the toothed crowns in engagement in the new orientation and re-engage the fastening means.

Although functionally effective, this solution suffers from the disadvantage of being relatively expensive, in particular as regards the realization or purchase of the two toothed crowns required for implementation. DE2648349A1 discloses an example of a known connecting joint. An aim of the present invention is to provide a connecting joint between handlebars and a frame of an agricultural tool, enabling lateral adjustment of the handlebars that is simpler and more economical to construct compared to the known solution.

This and other aims are attained by the characteristics of the invention described in the independent claims. The dependent claims describe preferred and/or particularly advantageous aspects of the invention.

In particular, an embodiment of the present invention provides a connecting joint between handlebars and a frame of an agricultural tool, comprising two metal sheets intended for respective fixture to the handlebars and to the frame of the agricultural tool,
wherein each metal sheet comprises at least a flat portion intended to be faced parallel to and in contact with a flat portion of the other metal sheet,
wherein the metal sheets rotate relative to one another about an axis of rotation that is perpendicular to the flat portions, and
wherein the flat portion of a first metal sheet of the metal sheets comprises a plurality of localized indentations, arranged along at least an arc of circumference centred on the axis of rotation, and the flat portion of the second metal sheet of the metal sheets comprises at least a localized indentation able to couple selectively with one of the localized indentations of the first metal sheet, on a basis of a different relative position of the first and second metal sheets with respect to the axis of rotation.

Thanks to this solution, the coupling between the localized indentations of the first metal sheet and of the second metal sheet functionally substitute the engagement of the frontal teeth of the toothed crowns utilized in the prior art, thus ensuring the possibility of laterally adjusting the position of the handlebars with respect to the frame, and also ensuring that in any position attained the coupling of the metal sheets is sufficiently stable and secure. Advantageously, the localized indentations of the first and second metal sheets can be realized in a simpler and more economical way than the front teeth of the toothed crowns utilized in the prior art, for example using a plate pressing process involving localised punching or forming.

Consequently, the connecting joint of the present invention is generally much more economical than that used in devices of known type, while providing equivalent functionality and effectiveness in use.

In a preferred aspect of the invention, the flat portion of the second metal sheet also comprises a plurality of localized indentations, intended to couple with the localized indentations of the first metal sheet in a plurality of positions of the first and second metal sheets with respect to the axis of rotation.

This aspect of the invention offers the advantage of increasing the stability of the connection between the first and second metal sheets and consequently between the handlebars and the frame of the agricultural tool during use.

It should be noted that the localized indentations of the second metal sheet are understood to be coupled with the localized indentations of the first metal sheet when at least one of the localized indentations of the second metal sheet is coupled with a corresponding indentation of the first metal sheet.

In a further preferred aspect of the invention, the first and the second metal sheets are connected using a connecting pin coaxial to the axis of rotation, inserted into two through-holes afforded by the flat portions of the first and second metal sheets.

In practice, the connecting pin defines a joint that permits and guides the first and second metal sheets to rotate relative to one another, facilitating adjustment of the handlebars by users.

In a further aspect of the invention, the connecting joint also comprises releasable fastening means acting to push the flat portion of the first metal sheet against the flat portion of the second metal sheet such as to block the metal sheets together in a stack.

In this way, after adjusting the lateral position, the handlebars can be stably restrained with respect to the frame of the agricultural tool during use.

In a preferred aspect of the invention the fastening means comprises in particular an abutting element solidly associated to a first end of the connecting pin, and a cam organ, hinged to the opposite end of the connecting pin, according to a hinge axis perpendicular to the axis of the connecting pin, the cam organ rotating about a hinge axis between a blocking position, where the flat portions of the first and second metal sheets are solidly stack-constrained between the cam organ and the abutting element, and a release position, where the flat portions of the first and second metal sheets are free to reciprocally separate by a certain distance along the axis of the pin.

The advantage of this solution is a simplification and reduction in number of components required to guarantee both the joint between the metal sheets, and the reciprocal blocking and release of the metal sheets.

Preferably, the cam organ comprises two identical profiled metal sheets reciprocally facing one another and positioned on opposite sides of the connecting pin.

In this way the connecting pin is always and only subject to traction stress, rendering the assembly more resistant and sturdy.

In another aspect of the invention the cam organ is fixed to an activating lever.

The activating lever may be advantageously gripped by a user to move the cam organ from the blocked position to the release position and vice versa, in a convenient manner and applying only limited force.

In a further aspect of the invention the first metal sheet can further comprise two opposite lateral portions, which branch by bending from the flat portion and between which a free end of a longitudinal member of the support frame is interposed, the lateral portions being hinged to the longitudinal member so as to enable the metal sheet to rotate on itself about a hinge axis perpendicular to the rotation axis with the second metal sheet.

With this solution, it is for example advantageously possible to adjust the position of the handlebar also in the vertical direction.

In a further aspect of the invention, each of the lateral portions can comprise an arched slot, each of which develops on an arc of circumference centred in the hinge axis and is facing a threaded hole fashioned on the corresponding flank of the longitudinal member, the threaded hole being able to receive a threaded pin borne by a handle able to be positioned on the external side of the lateral portion.

In this way, it is advantageously possible to limit the rotation of the first metal sheet about the hinge axis and, by screwing the threaded pin, to block it in the desired position.

An alternative embodiment of the present invention provides an agricultural tool comprising a frame, handlebars, and a connecting joint as delineated herein above, wherein one metal sheet of the joint is fixed to the handlebars and the other metal sheet is fixed to the tool frame.

This embodiment of the invention provides substantially the same advantages described herein above, in particular providing lateral adjustment of the handlebars in a constructionally simple and economic form.

Further characteristics and advantages of the invention will better emerge from the detailed description made herein, provided by way of non-limiting example in the accompanying figures of the drawings.
Figure 1 is a lateral view of a motor hoe in an embodiment of the present invention.
Figure 2 is a front view of the motor hoe of figure 1.
Figure 3 is an exploded view of a connecting joint between the handlebars and frame of the motor hoe of figure 1.
Figure 4 is an enlarged detail of figure 3.
Figure 5 is the cross-section along V-V of figure 6.
Figure 6 is a view from above of the connecting joint between the handlebars and frame of the motor hoe of figure 1.

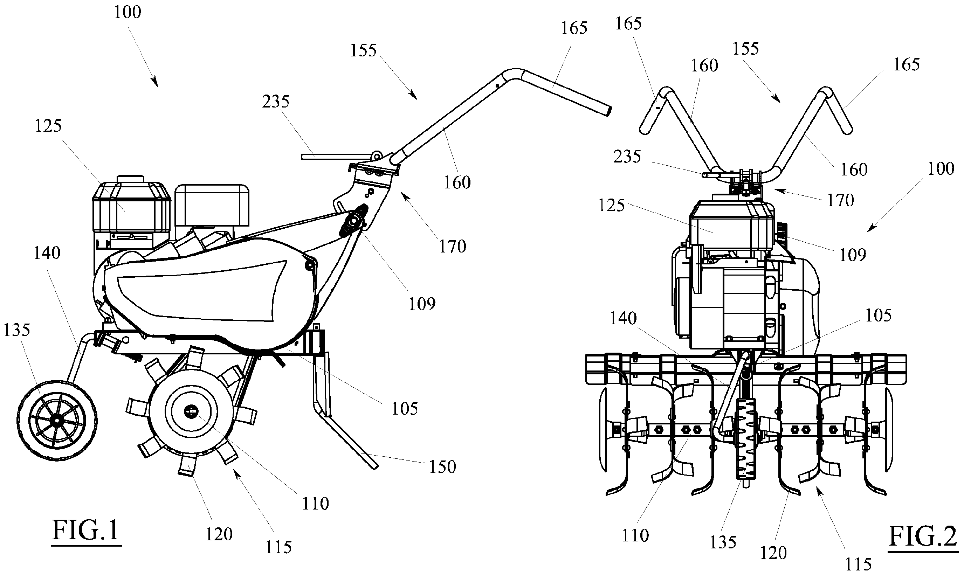

With particular reference to figures 1 and 2, an agricultural tool is labelled in its entirety as 100, here a motor hoe for recreational use and particularly suited to hoeing and/or weeding small allotments of land, for example vegetable allotments or gardens, the motor hoe 100 being guided and controlled by a user who proceeds on foot behind the tool.

The motor hoe 100 comprises a rigid support frame 105 on which a horizontal-axis rotating shaft 110 is rotatingly installed, and to which a plurality of hoeing elements 115 are coaxially splined. The hoeing elements 115 are individually equipped with a central hub exhibiting a plurality of curved radial blades 120, intended to directly contact the terrain such as to lift and break up turf.

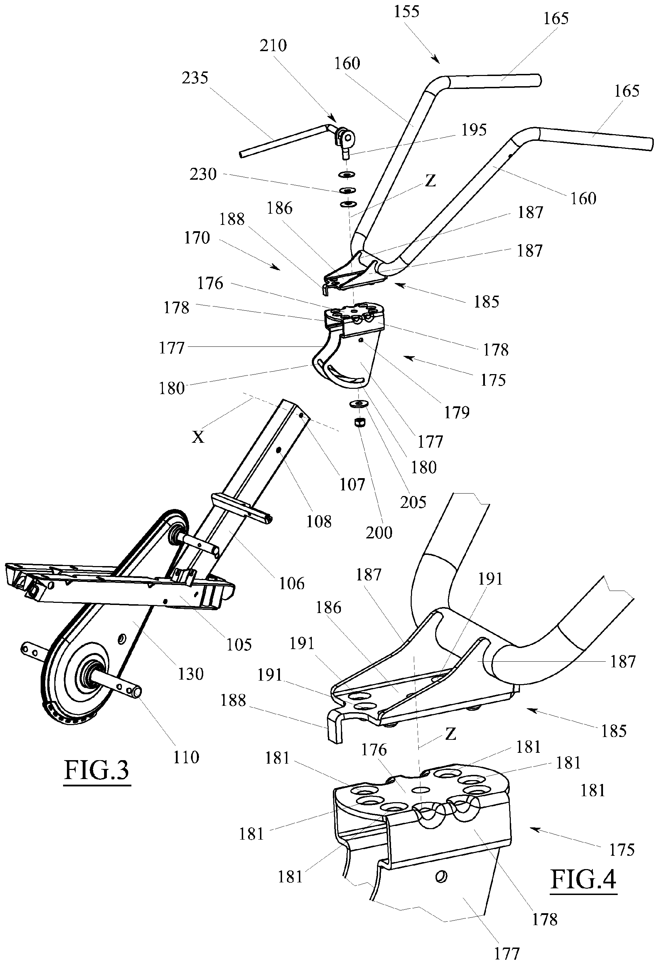

The rotating shaft 110 is activated in rotation by an internal combustion engine 125, typically a small petrol engine equipped with a fuel reservoir, installed on the support frame 105 above the hoeing elements 115, and connected to the rotating shaft 110 using a transmission system 130 (illustrated in figure 3). The transmission system 130 is installed on the support frame 105, and generally comprises a pair of pulleys and a transmission belt (not visible) enclosed inside a guard casing.

Also fitted to the support frame 105 is a support wheel 135, disposed with rotational axis parallel to the axis of rotation of the rotating shaft 110 and anterior to the rotating shaft 110 in the advancing direction as defined by the hoeing elements 115, such as to maintain ground contact and facilitate movement of the motor hoe 100 when the rotating shaft 110 and hoeing elements 115 are stationary.

In particular, the support wheel 135 is idle and rotatingly coupled to a single support arm 140, which is mobile between a first position illustrated in figure 1, wherein the wheel 135 bears on the ground, and a second position, not illustrated, wherein the wheel 135 is raised from the ground.

Further associated to the rear area of the support frame 105 is a profiled bar 150, commonly called a spur, exhibiting a free and slightly curved end destined to directly contact the ground, and an opposite end connected to the support frame 105.

The profiled bar 150 serves as a rear support element for the motor hoe 100 during operation of the hoeing elements 115, such as to define an inclination of the support frame 105 with respect to the ground, and thus the position of the centre of gravity of the motor hoe 100 with respect to the axis of rotation of the rotating shaft 110, on which the depth of hoeing action depends.

If the centre of gravity is displaced forwards, the motor hoe 100 tends to advance over the ground without penetrating into the ground, while if the centre of gravity is displaced backwards (towards the user), the motor hoe 100 tends to sink into the ground without advancing.

Handlebars 155 are further fixed on the rear portion of the support frame 105, intended to be gripped by the user to guide and control the movements of the motor hoe 100 over the ground.

In the illustrated embodiment, the handlebars 155 comprise a central portion from where two bars 160 depart, generally inclined upwards, each bar 160 terminating with a grip 165 inclined in the opposite direction and designed to be gripped by the user.

The handlebars 155 are preferably realized in a single piece comprising a suitably shaped tube.

Control means (not illustrated) are generally fitted on the handlebars 155, for example an accelerator lever and/or a switch for stopping the engine 125, the control means being positioned on the grips 165 such as to be easily activated by the hands of the user.

As illustrated in figure 3, the handlebars 155 are connected to the support frame 105 of the motor hoe 100 using a connecting joint denoted in its entirety by 170.

The connecting joint 170 essentially comprises two shaped metal sheets, including a first metal sheet 175 fixed directly to the support frame 105 and a second metal sheet 185 fixed directly to the handlebars 155.

The first metal sheet 175 exhibits an upper flat portion 176 and two flat lateral portions 177 facing one another, formed by a curving of the upper portion 176. The lateral portions 177 are identical in shape, face one another reciprocally, and project downwardly perpendicularly to the upper portion 176. In particular, each lateral portion 177 is connected to the upper portion 176 by a respective intermediate portion 178, which exhibits an essentially "C" shaped profile, such that the two lateral portions 177 are separated from one another by a distance of less than the width of the upper portion 176.

The free end of a longitudinal member 106 of the support frame 105 is interposed between the two lateral portions 177. In the illustrated example, the longitudinal member 106 is a tubular rectangular profile section directly welded to the support frame 105.

The opposite sides of the longitudinal member 106 exhibit two coaxial holes 107 (only one of which is visible in figure 3), each of which holes 107 can be aligned with a respective through hole 179 afforded in each of the lateral portions 177 of the metal sheet 175. A pin or screw is inserted into the two pairs of holes 107 and 179, such as to permit the metal sheet 175 to rotate on the longitudinal member 106 about a horizontal axis X parallel to the axis of rotation of the rotating shaft 110.

Each lateral portion 177 further comprises an arched slot 180, developing along an arc of circumference centred on the respective hole 179. Each arched slot 180 faces a threaded hole 108 (only one of which is visible in figure 3) afforded in the corresponding flank of the longitudinal member 106. The threaded hole 108 receives a threaded pin, fitted into a handle 109 (visible in figures 1 and 2) which is positioned on the external side of the lateral portion 177.

In this way, by screwing the threaded pin tight, the handle 109 can restrain the metal sheet 175 relative to the longitudinal member 106. Loosening the screw frees the threaded pin to slide inside the arched slot 180, enabling the metal sheet 175 to rotate about an axis X but only within a predetermined angle of oscillation.

The second metal sheet 185 affords a lower flat portion 186 and two opposite flat lateral portions 187, which derive by bending from the lower portion 186. The lateral portions 187 are of identical shape and reciprocally face one another, developing perpendicularly upwards relative to the lower portion 186. The lateral portions 187 are profiled such as to supportingly engage the central portion of the handlebars 155 which is welded to the metal sheet 185. The lower flat portion 186 of the metal sheet 185 is facingly parallel to and superposed on the upper flat portion 176 of the metal sheet 175, and can rotate relative to the metal sheet 175 about an axis of rotation Z, substantially vertical or slightly inclined, perpendicular to and passing through the centre of both the flat portions 176 and 186.

To limit rotation of the metal sheet 185 about the axis of rotation Z, the lower portion 186 exhibits a tongue element 188 derived by bending. The tongue element 188 projects downwards from the front edge of the lower portion 186, such as to face the front edge of the upper portion 176 of the metal sheet 175 which has an arc of circumference profile centred on the axis of rotation Z. In this way, the rotation of the metal sheet 185 is inhibited when the tongue element 188 comes into contact with one of the intermediate portions 178 of the metal sheet 175, which act as endrun stops.

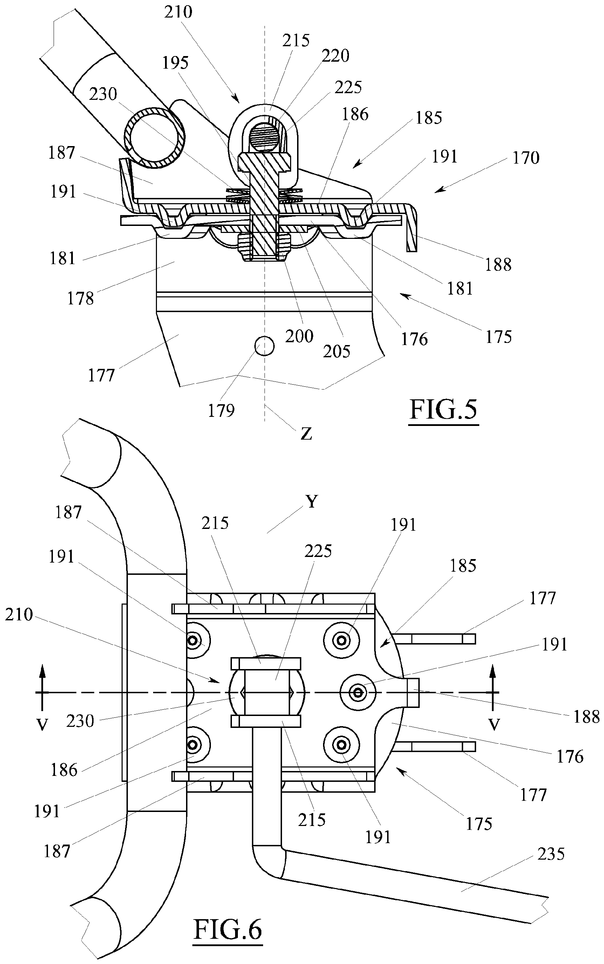

As illustrated in figure 5, the axis of rotation Z is defined by the axis of a connecting pin 195, inserted into a pair of coaxial holes afforded respectively in the centre of the upper portion 176 of the metal sheet 175, and the centre of the lower portion 186 of the metal sheet 185. In the illustrated example, the connecting pin 195 is defined by a screw, the head of which is positioned above the lower portion 186 of the metal sheet 185.

At the lower end of the connecting pin 195 a threaded nut 200 is screwed onto the connecting pin 195, intended to bear, preferably with the interposing of a washer 205, on the lower surface of the upper flat portion 176 of the metal sheet 175. In this way the nut 200 and washer 205 define in their entirety an abutting element that prevents the connecting pin 195 from axially sliding out upwards.

The upper end of the connecting pin 195 is instead hinged to a cam organ, denoted in its entirety by 210, rotating about a hinge axis Y perpendicular to the axis Z of the connecting pin 195.

In the illustrated example, the cam organ 210 comprises two profiled plates 215, fixed at opposite ends of a central pin 220, the axis of which coincides with the hinge axis Y. The central pin 220 rests on the upper end of the connecting pin 195, where the central pin 220 is blocked by a U bolt 225. In this way, the upper end of the connecting pin 195 and the U bolt 225 together define a seating that laterally blocks the central pin 220, permitting rotation of the connecting pin 195 and the U bolt 225 about the axis Y.

The profiled plates 215 are the same shape, specularly face one another and are located on opposite sides of the connecting pin 195, such as to rest, preferably with the interposing of a spring (in the example a stack of belleville washers 230 inserted onto the connecting pin 195) on the upper surface of the lower flat portion 186 of the metal sheet 185, in this way preventing the connecting pin 195 from axially sliding out downwards and preventing the metal sheets 175 and 185 from separating.

In particular, the profiled plates 215 exhibit an eccentric shape relative to the axis of articulation Y, such as to be able to rotate between a locking position (shown in figure 5), wherein the flat portions 176 and 186 of the metal sheets 175 and 185 are tightly bound together between the profiled plates 215 of the cam organ 210 and the washer 205, compressing the cup springs 230, and a release position (not illustrated in the figures), wherein the flat portions 176 and 186 of the metal sheets 175 and 185 are free to reciprocally separate by a certain distance along the axis Z of the connecting pin 195.

The rotation of the profiled plates 215 can be actuated using a manual lever 235, fixed to the external face of one of the profiled plates 215.

As illustrated in figure 4, the upper flat portion 176 of the metal sheet 175 exhibits a plurality of localized indentations 181, arranged along an imaginary circumference centred on the axis of rotation Z.

In particular, in the illustrated example, the localized indentations 181 are subdivided into two groups, a first group on the front edge of the flat portion 176 and a second group on the opposite rear end. The localized indentations 181 of each of the groups are arranged angularly equidistant along a limited arc of the imaginary circumference.

Correspondingly, the lower flat portion 186 of the metal sheet 185 also exhibits a plurality of localized indentations 191, arranged such as to couple with the localized indentations 181 of the metal sheet 175, in a plurality of different relative positions of the metal sheet 185 about the axis of rotation Z. In the illustrated example, the indentations 191 are also arrayed along an imaginary circumference centred on the axis of rotation Z of the same diameter as the imaginary circumference on which the indentations 181 of the metal sheet 175 are arranged. In particular, the localized indentations 191 are also divided into two groups (also see figure 6), of which a group located on a forward edge of the flat portion 186 and another group located on the opposite rear edge, the localized indentations 191 of each of these groups being angularly equidistant from one another.

It is important to note that the localized indentations are understood in general to be indentations in the metal sheet obtained individually by plastic deformation of a limited area of the metal sheet. The indentations may be formed by very simple and economic means using hot or cold pressing techniques, for example by punching or drawing of the metal sheet.

It should also be noted that an indentation 191 is defined as coupled with an indentation 181 when the convexity of an indentation 191 is engaged into the concavity of an indentation 181.

Using the connecting joint 170 herein described above, the handlebars 155 can be adjusted such as to vary the position of the grips 165 in both vertical and horizontal directions, for example such as to adapt the handlebars 155 to different requirements of use, as well as to the height and preferences of individual users.

In particular, to adjust the height of the handlebars 155, a user need simply release the handle 109 and rotate the metal sheet 175 about the axis X relative to the longitudinal member 106 of the support frame 105. When the required height is reached, the user newly retightens the handle 109 to fasten the metal sheet 175.

In order to adjust the lateral position of the handlebars 155, the user must first move the lever 235 upwards, such as to rotate the profiled plates 215 of the cam organ 210 into the release position. Now the flat portions 176 and 186 of the metal sheets 175 and 185 can be separated along the axis Z of the connecting pin 195, in contrast to the action of the belleville wahsers 230, by a sufficient distance to disengage the localized indentations 191 of the metal sheet 185 from the localized indentations 181 of the metal sheet 175. The metal sheet 185 can then be rotated, together with the handlebars 155, about the axis Z of the connecting pin 195, in a direction or an opposite direction, until reaching another position wherein the localized indentations 191 of the metal sheet 185 can couple frontally with the indentations of the localized indentations 181 of the metal sheet 175. Once frontal coupling of the indentations 181 and 191 in a new position has been established, the user moves the lever 235 downwards, such as to rotate the profiled plates 215 of the cam organ 210 and return them into the locking position.

In conclusion, it should be noted that the localized indentations 191 are considered to be frontally coupled to the localized indentations 181 when at least one of the indentations 191 is received inside a corresponding localized indentation 181, such that the flat portions 176 and 186 of the metal sheet can be substantially in contact and form a geometric bond that prevents the relative flat portions from rotating on one another.

In this sense, an alternative embodiment could include that the flat portion 186 of the metal sheet 185 comprises a single indentation 191, selectively coupling to one of the indentations 181 of the metal sheet 175 at different angular positions of the metal sheet 185.

It should further be noted that while the indentations 181 and 191 described previously exhibit a concavity facing upwards, other embodiments might foresee that the indentations 181 and 191 face downwards.

Obviously a technical expert in the sector could introduce numerous modifications of a practical-technical nature to the motor hoe 100, without going outside of the range of the invention as claimed below.

## Claims

1. A connecting joint (170) between handlebars (155) and a frame (105) of an agricultural tool (100), wherein the joint (170) comprises two metal sheets (175, 185) fixable respectively to the handlebars (155) and the frame (105) of the agricultural tool,
wherein each metal sheet (175, 185) comprises at least a flat portion (176, 186) intended to be faced parallel to and in contact with a flat portion of the other metal sheet,
wherein the metal sheets (175, 185) rotate relative to one another about an axis of rotation (Z) that is perpendicular to the flat portions (176, 186), and
wherein the flat portion (176) of a first metal sheet (175) of the metal sheets comprises a plurality of localized indentations (181), arranged along at least an arc of circumference centred on the axis of rotation (Z), and the flat portion (186) of the second metal sheet (185) of the metal sheets comprises at least a localized indentation (191) able to couple selectively with one of the localized indentations (181) of the first metal sheet (175), on a basis of a different relative position of the first and second metal sheets (175, 185) with respect to the axis of rotation (Z).

2. The joint (170) of claim 1, wherein the flat portion (186) of the second metal sheet (185) comprises a plurality of localized indentations (191), which are able to couple with the localized indentations (181) of the first metal sheet (175) in a plurality of relative positions of the first and second metal sheets (175, 185) with respect to the axis of rotation (Z).

3. The joint (170) of any one of the preceding claims, wherein the first and the second metal sheets (175, 185) are connected by a connecting pin (195) coaxial to the axis of rotation (Z), the pin (195) being inserted into two through-holes afforded in the flat portions (176, 186) of the first and second metal sheets (175, 185).

4. The joint (170) of any one of the preceding claims, comprising releasable blocking means (200, 210) acting to press the flat portion (176) of the first metal sheet (175) against the flat portion (186) of the second metal sheet (185) such as to constrain them together in a stack.

5. The joint (170) of any one of preceding claims 3 and 4, wherein the fastening means comprise an abutting element (200) solidly associated to a first end of the connecting pin (195), and a cam organ (210) hinged to an opposite end of the connecting pin (195) along a hinge axis (Y) perpendicular to the axis (Z) of the pin (195), the cam organ (210) rotating about the hinge axis (Y) between a locking position, in which the flat portions (176, 186) of the first and second metal sheets (175, 185) are constrained together in a stack between the cam organ (210) and the abutting element (200), and a release position, in which the flat portions (176, 186) of the first and second metal sheets (175, 185) are free to reciprocally distance by a certain amount along the axis (Z) of the pin (195).

6. The joint (170) of claim 5, wherein the cam organ (210) comprises two identical profiled plates (215) reciprocally facing one another and located on opposite sides of the connecting pin (195).

7. The joint (170) of claim 5 or 6, wherein the cam organ (210) is fixed to an activating lever (235).

8. The joint (170) of any one of the preceding claims, wherein the localised indentations of the first and the second metal sheet are obtained by means of a sheet metal forming die.

9. The joint (170) of any one of the preceding claims, wherein the first metal sheet (175) further comprises two opposite lateral portions (177), which branch by bending from the flat portion (176) and between which a free end of a longitudinal member of the support frame is interposed, the lateral portions being hinged to the longitudinal member so as to enable the metal sheet to rotate on itself about a hinge axis perpendicular to the rotation axis with the second metal sheet.

10. The joint (170) of claim 9, wherein each lateral portion (177) comprises an arched slot (180), each of which develops on an arc of circumference centred in the hinge axis (X) and is facing a threaded hole (108) fashioned on the corresponding flank of the longitudinal member (106), the threaded hole (108) being able to receive a threaded pin borne by a handle (109) able to be positioned on the external side of the lateral portion (177).

11. An agricultural tool (100) comprising a frame (105), handlebars (155) and a connecting joint (170) as in any one of the preceding claims, wherein a metal sheet (185) of the joint (170) is fixed to the handlebars (155) and the other metal sheet (175) is fixed to the frame (105) of the agricultural tool.

## Patentansprüche

1. Verbindungsgelenk (170) zwischen Lenkern (155) und einem Gestell (105) eines landwirtschaftlichen Geräts (100), wobei das Gelenk (170) zwei Metallbleche (175, 185) umfasst, die jeweils an den Lenkern (155) und am Gestell (105) des landwirtschaftlichen Geräts befestigbar sind,
wobei jedes Metallblech (175, 185) wenigstens einen flachen Abschnitt (176, 186) umfasst, der dazu bestimmt ist, einem flachen Abschnitt des anderen Metallbleches parallel zugewandt und im Kontakt hiermit zu sein,
wobei die Metallbleche (175, 185) sich relativ zueinander um eine Drehachse (Z) drehen, die sich senkrecht zu den flachen Abschnitten (176, 186) befindet, und
wobei der flache Abschnitt (176) eines ersten Metallbleches (175) der Metallbleche eine Mehrzahl von örtlich begrenzten Einkerbungen (181) umfasst, die längs wenigstens eines Umfangsbogens angeordnet sind, der auf die Drehachse (Z) zentriert ist, und wobei der flache Abschnitt (186) des zweiten Metallbleches (185) der Metallbleche wenigstens eine örtlich begrenzte Einkerbung (191) umfasst, die in der Lage ist, an eine der örtlich begrenzten Einkerbungen (181) des ersten Metallbleches (175) auf der Basis einer unterschiedlichen relativen Stellung der ersten und zweiten Metallbleche (175, 185) in Bezug auf die Drehachse (Z) selektiv anzukoppeln.

2. Gelenk (170) nach Anspruch 1, wobei der flache Abschnitt (186) des zweiten Metallbleches (185) eine Mehrzahl von örtlich begrenzten Einkerbungen (191) umfasst, die in der Lage sind, an die örtlich begrenzten Einkerbungen (181) des ersten Metallbleches (175) in einer Mehrzahl von relativen Stellungen der ersten und zweiten Metallbleche (175, 185) in Bezug auf die Drehachse (Z) anzukoppeln.

3. Gelenk (170) nach einem der vorstehenden Ansprüche, wobei die ersten und zweiten Metallbleche (175, 185) durch einen koaxial zur Drehachse (Z) befindlichen Verbindungsstift (195) verbunden sind, wobei der Stift (195) in zwei durchgehende Bohrungen eingefügt ist, die in den flachen Abschnitten (176, 186) der ersten und zweiten Metallbleche (175, 185) erhalten sind.

4. Gelenk (170) nach einem der vorstehenden Ansprüche, umfassend lösbare Sperrmittel (200, 210), die zum Drücken des flachen Abschnitts (176) des ersten Metallbleches (175) gegen den flachen Abschnitt (186) des zweiten Metallbleches (185) wirken, derart, dass sie in einem Stapel zusammengehalten werden.

5. Gelenk (170) nach einem der vorstehenden Ansprüche 3 und 4, wobei die Befestigungsmittel ein Anstoßelement (200) umfassen, das fest mit einem ersten Ende des Verbindungstifts (195) verbunden ist, und ein Nockenorgan (210), das an einem gegenüberliegenden Ende des Verbindungsstifts (195) längs einer Scharnierachse (Y) angelenkt ist, die sich senkrecht zu der Achse (Z) des Stifts (195) befindet, wobei das Nockenorgan (210) sich um die Scharnierachse (Y) zwischen einer Sperrposition, in der die flachen Abschnitte (176, 186) der ersten und zweiten Metallbleche (175, 185) in einem Stapel zwischen dem Nockenorgan (210) und dem Anstoßelement (200) zusammengehalten werden, und einer Freigabeposition dreht, in der die flachen Abschnitte (176, 186) der ersten und zweiten Metallbleche (175, 185) frei sind, sich längs der Achse (Z) des Stifts (195) um einen bestimmten Betrag voneinander zu beabstanden.

6. Gelenk (170) nach Anspruch 5, wobei das Nockenorgan (210) zwei identische profilierte Platten (215) umfasst, die einander zugewandt und auf gegenüberliegenden Seiten des Verbindungstifts (195) angeordnet sind.

7. Gelenk (170) nach Anspruch 5 oder 6, wobei das Nockenorgan (210) an einem Betätigungshebel (235) befestigt ist.

8. Gelenk (170) nach einem der vorstehenden Ansprüche, wobei die örtlich begrenzten Einkerbungen des ersten und zweiten Metallbleches mittels eines Blechumformwerkzeugs erhalten werden.

9. Gelenk (170) nach einem der vorstehenden Ansprüche, wobei das erste Metallblech (175) ferner zwei gegenüberliegende, seitliche Abschnitte (177) umfasst, die durch Abkröpfen aus dem flachen Abschnitt (176) abzweigen und zwischen die ein freies Ende eines Längselements des Traggestells eingefügt ist, wobei die seitlichen Abschnitte an dem Längselement angelenkt sind, derart, dass es dem Metallblech möglich ist, sich um sich selbst um eine Scharnierachse senkrecht zur Drehachse mit dem zweiten Metallblech zu drehen.

10. Gelenk (170) nach Anspruch 9, wobei jeder seitliche Abschnitt (177) einen gewölbten Schlitz (180) umfasst, der sich jeweils auf einem Umfangsbogen verläuft, der auf die Scharnierachse (X) zentriert und einer Gewindebohrung (108) zugewandt ist, die auf der entsprechenden Flanke des Längselements (106) ausgebildet ist, wobei die Gewindebohrung (108) in der Lage ist, einen Gewindestift aufzunehmen, der von einem Handgriff (109) getragen wird, der auf der Außenseite des seitlichen Abschnitts (177) angebracht werden kann.

11. Landwirtschaftliches Gerät (100) umfassend ein Gestell (105), Lenker (155) und ein Verbindungsgelenk (170) nach einem der vorstehenden Ansprüche, wobei ein Metallblech (185) des Gelenks (170) an den Lenkern (155) befestigt ist und das andere Metallblech (175) an dem Gestell (105) des landwirtschaftlichen Geräts befestigt ist.

## Revendications

1. Joint de raccordement (170) entre des mancherons (155) et un châssis (105) d'un outil agricole (100), dans lequel le joint (170) comprend deux plaques métalliques (175, 185) pouvant être fixées respectivement aux mancherons (155) et au châssis (105) de l'outil agricole,
dans lequel chaque plaque métallique (175, 185) comprend au moins une portion plate (176, 186) destinée à faire face parallèle et en contact avec une portion plate de l'autre plaque métallique,
dans lequel les plaques métalliques (175, 185) tournent l'une par rapport à l'autre autour d'un axe de rotation (Z) qui est perpendiculaire aux portions plates (176, 186), et
dans lequel la portion plate (176) d'une première plaque métallique (175) des plaques métalliques comprend une pluralité d'échancrures localisées (181), agencées le long d'au moins un arc de cercle centré sur l'axe de rotation (Z), et la portion plate (186) de la deuxième plaque métallique (185) des plaques métalliques comprend au moins une échancrure localisée (191) adaptée pour se coupler de manière sélective avec une des échancrures localisées (181) de la première plaque métallique (175), sur la base d'une position relative différente des première et deuxième plaques métalliques (175, 185) par rapport à l'axe de rotation (Z).

2. Joint (170) selon la revendication 1, dans lequel la portion plate (186) de la deuxième plaque métallique (185) comprend une pluralité d'échancrures localisées (191), qui sont adaptées pour se coupler avec les échancrures localisées (181) de la première plaque métallique (175) dans une pluralité de positions relatives des première et deuxième plaques métalliques (175, 185) par rapport à l'axe de rotation (Z).

3. Joint (170) selon l'une quelconque des revendications précédentes, dans lequel les première et deuxième plaques métalliques (175, 185) sont connectées par une goupille de liaison (195) coaxiale à l'axe de rotation (Z), la goupille (195) étant insérée dans deux trous passants ménagés dans les portions plates (176, 186) des première et deuxième plaques métalliques (175, 185).

4. Joint (170) selon l'une quelconque des revendications précédentes, comprenant des moyens de blocage libérables (200, 210) agissant pour presser la portion plate (176) de la première plaque métallique (175) contre la portion plate (186) de la deuxième plaque métallique (185) de manière à les bloquer ensemble en un empilement.

5. Joint (170) selon l'une quelconque des revendications précédentes 3 et 4, dans lequel les moyens de fixation comprennent un élément de butée (200) fermement associé à une première extrémité de la goupille de liaison (195), et un organe formant came (210) articulé à une extrémité opposée de la goupille de liaison (195) suivant un axe d'articulation (Y) perpendiculaire à l'axe (Z) de la goupille (195), l'organe formant came (210) tournant autour de l'axe d'articulation (Y) entre une position de verrouillage, dans laquelle les portions plates (176, 186) des première et deuxième plaques métalliques (175, 185) sont bloquées ensemble en un empilement entre l'organe formant came (210) et l'élément de butée (200), et une position de libération, dans laquelle les portions plates (176, 186) des première et deuxième plaques métalliques (175, 185) sont libres de s'éloigner réciproquement d'une certaine quantité suivant l'axe (Z) de la goupille (195).

6. Joint (170) selon la revendication 5, dans lequel l'organe formant came (210) comprend deux plaques profilées identiques (215) se faisant face mutuellement et situées sur des côtés opposés de la goupille de liaison (195).

7. Joint (170) selon la revendication 5 ou 6, dans lequel l'organe formant came (210) est fixé à un levier d'actionnement (235).

8. Joint (170) selon l'une quelconque des revendications précédentes, dans lequel les échancrures localisées de la première et la deuxième plaque métallique sont obtenues au moyen d'une matrice d'emboutissage de tôle métallique.

9. Joint (170) selon l'une quelconque des revendications précédentes, dans lequel la première plaque métallique (175) comprend en outre deux portions latérales opposées (177), qui se ramifient par pliage à partir de la portion plate (176) et entre lesquelles une extrémité libre d'un élément longitudinal du châssis de support est interposée, les portions latérales étant articulées sur l'élément longitudinal de manière à permettre à la plaque métallique de tourner sur elle-même autour d'un axe d'articulation perpendiculaire à l'axe de rotation avec la deuxième plaque métallique.

10. Joint (170) selon la revendication 9, dans lequel chaque portion latérale (177) comprend une fente en forme d'arc (180), chacune desquelles s'étend sur un arc de cercle centré sur l'axe d'articulation (X) et fait face à une trou fileté (108) réalisé sur le flanc correspondant de l'élément longitudinal (106), le trou fileté (108) étant adapté pour recevoir une tige fileté supportée par une poignée (109) adaptée pour être positionnée sur le côté externe de la portion latérale (177).

11. Outil agricole (100) comprenant un châssis (105), des mancherons (155) et un joint de raccordement (170) selon l'une quelconque des revendications précédentes, dans lequel une plaque métallique (185) du joint (170) est fixée aux mancherons (155) et l'autre plaque métallique (175) est fixée au châssis (105) de l'outil agricole.
